# EUROPEAN PATENT APPLICATION

(11) **EP 4 699 916 A1**
(43) Date of publication of application: **25.02.2026**
(21) Application number: 25195369.1
(22) Date of filing: 12.08.2025
(51) Int. Cl.: B62K 25/02, B62M 6/65

(54) **ANTI-MISASSEMBLY AND ANTI-ROTATION STRUCTURE FOR ELECTRIC BICYCLE**

(30) Priority: 19.08.2024 TW 113131115
(71) Applicant: J.D Components Co., Ltd., Shou Shui Hsiang, Chang Hua Hsien (TW)
(72) Inventor: LIN, HUNG-CHI, CHANG HUA HSIEN, (TW)
(74) Representative: Straus, Alexander

(57) **Abstract**

An anti-misassembly and anti-rotation structure for an electric bicycle includes a hub motor (1), an anti-misassembly and anti-rotation component (2), and a rear fork component (3). The anti-misassembly and anti-rotation component (2) comprises a first adapter (21) and a second adapter (22). The first adapter (21) includes a first base (211), a first annular portion (212), and a first shaft hole (213). The second adapter (22) includes a second base (221), a second annular portion (222), and a second shaft hole (223). A first inclined surface (214) of the first adapter (21) is abutted against a second inclined surface (224) of the second adapter (22), and the outer periphery of the first annular portion (212) of the first adapter (21) is abutted against the inner periphery of a stopper flange (225) of the second adapter (22). In this way, the cooperation of the first and second inclined surfaces (214)(224) enhances installation convenience and also prevents the hub motor (1) from driving the rear fork component (3) to rotate.

## Description

### BACKGROUND OF THE INVENTION

### 1. Field of the Invention

The present invention relates to electric bicycles and more particularly, to an anti-misassembly and anti-rotation structure for an electric bicycle that provides an anti-misassembly and anti-rotation component to be disposed between the rear fork of the bicycle frame and the hub motor. Through the design of inclined surfaces, a specific assembly direction is provided, and mutual engagement between components is enabled to achieve the functions of preventing incorrect assembly and rotation.

### 2. Description of the Related Art

The mounting mechanism between a bicycle frame and the wheel can be classified into quick-release type and thru-axle type. In the quick-release type, the two dropout portions of the front/rear fork are engaged with both ends of the wheel axle, and a quick-release lever is then used to fasten and complete the installation. In the thru-axle type, a thru-axle passes through both ends of the wheel axle and the two dropout portions of the front/rear fork. One of the dropout portions is designed with a hole to allow the thru-axle to pass through, while the other dropout portion is designed with a threaded hole, so that the external thread on one end of the thru-axle can be fastened into the threaded hole of the dropout. Compared to the quick-release type, the thru-axle type is less likely to loosen due to vibrations during riding.

CN 221162022 U discloses a thru-axle for bicycles, which is designed to be compatible with various frame specifications. The thru-axle itself is standardized, and different types of washers are assembled at one end of the thru-axle to accommodate the dropout portions of different frame specifications. However, current electric bicycles lack an anti-rotation mechanism, making it easy for the thru-axle to be driven by the hub motor, which may result in failure of the hub motor's output power.

TW M621342 provides a motor anti-rotation structure. It achieves anti-rotation by providing flat anti-rotation surfaces on both axles of the hub motor and combining them with two anti-rotation components. The anti-rotation surfaces of the axles are abutted against the anti-rotation surfaces of the components, so that the hub motor does not affect the rear fork or thru-axle during operation. While this anti-rotation structure can effectively prevent the thru-axle from being driven by the hub motor, it requires anti-rotation surface designs on both ends of the hub motor's axles and the corresponding installation of two anti-rotation components, which makes the structural design more complex. Therefore, how to provide a structure capable of preventing the hub motor from affecting the thru-axle during operation is the direction contemplated by the inventor.

### SUMMARY OF THE INVENTION

It is a primary objective of the present invention to provide an anti-misassembly and anti-rotation structure for an electric bicycle, which can achieve an anti-misassembly mechanism and anti-rotation function.

To attain the above objective, the anti-misassembly and anti-rotation structure of the present invention comprises a hub motor, an anti-misassembly and anti-rotation component, and a rear fork component. The hub motor has a through hole and a side cover plate. The anti-misassembly and anti-rotation component includes a first adapter and a second adapter. The first adapter is fixed to the side cover plate of the hub motor and includes a first base, a first annular portion protruding from the first base and having a first inclined surface at one end thereof, and a first shaft hole passing through the first base and the first annular portion. The second adapter includes a second base, a second annular portion protruding from the second base and having a second inclined surface and a stopper flange surrounding the second inclined surface, and a second shaft hole passing through the second base and the second annular portion. The first inclined surface of the first adapter is abutted against the second inclined surface of the second adapter, and an outer periphery of the first annular portion of the first adapter is abutted against an inner periphery of the stopper flange of the second base. The rear fork component includes two mounting portions and a through shaft inserted into the through hole of the hub motor, the first shaft hole of the first adapter, and the second shaft hole of the second adapter. One of the mounting portions is assembled to one end of the through shaft, while the other of the mounting portions is assembled to the second annular portion of the second adapter.

It can be seen from the above that the present invention utilizes two inclined surfaces to allow the hub motor and the rear fork component to be assembled in a specific orientation during installation, thereby achieving an anti-misassembly mechanism. Furthermore, the first adapter and the second adapter are interlocked with each other through the two inclined surfaces to secure the hub motor and the rear fork component, thereby achieving the anti-rotation function.

In one embodiment of the present invention, the first adapter further includes a plurality of first lugs protruding from the first base and fastened to the side cover plate of the hub motor.

In one embodiment of the present invention, the second adapter further includes a plurality of second lugs protruding from the second base and fastened to the rear fork component.

In one embodiment of the present invention, the stopper flange of the second adapter further has an opening, such that the outer periphery of the first annular portion of the first adapter is partially abutted against the inner periphery of the stopper flange of the second base.

In one embodiment of the present invention, the rear fork component further comprises a first accessory received in the first shaft hole of the first adapter and having a first communication hole communicating with the first shaft hole, and a second accessory received in the second shaft hole of the second adapter and having a second communication hole communicating with the second shaft hole.

In one embodiment of the present invention, the through shaft is inserted into the through hole of the hub motor, the first shaft hole of the first adapter, the first communication hole of the first accessory, and the second communication hole of the second accessory.

In one embodiment of the present invention, the first accessory comprises a plurality of pin grooves, and the inner periphery of the first annular portion of the first adapter is provided with an inner edge bracket and a plurality of pin holes disposed on the inner edge bracket. Multiple pins are inserted through the pin grooves and the pin holes to secure the first accessory in the first shaft hole of the first adapter.

In one embodiment of the present invention, the second accessory comprises a plurality of fixing grooves, and the second annular portion of the second adapter is provided with a plurality of fixing holes. Multiple fixing members are used to secure the second accessory in the second shaft hole of the second adapter via the fixing grooves and the fixing holes.

### BRIEF DESCRIPTION OF THE DRAWINGS

FIG. 1 is a perspective view of the present invention.
FIG.2 is an exploded view of the present invention.
FIG. 3 is an exploded view of the present invention from another perspective.
FIG. 4 is a perspective view of the anti-misassembly and anti-rotation component of the present invention.
FIG. 5 is an exploded view of FIG. 5.
FIG. 6 is an exploded view of FIG. 5 from another perspective.

### DETAILED DESCRIPTION OF THE INVENTION

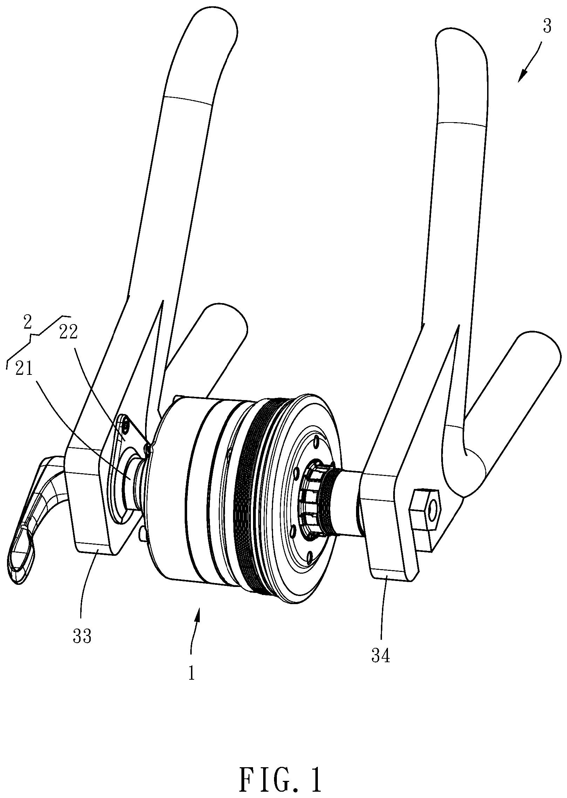

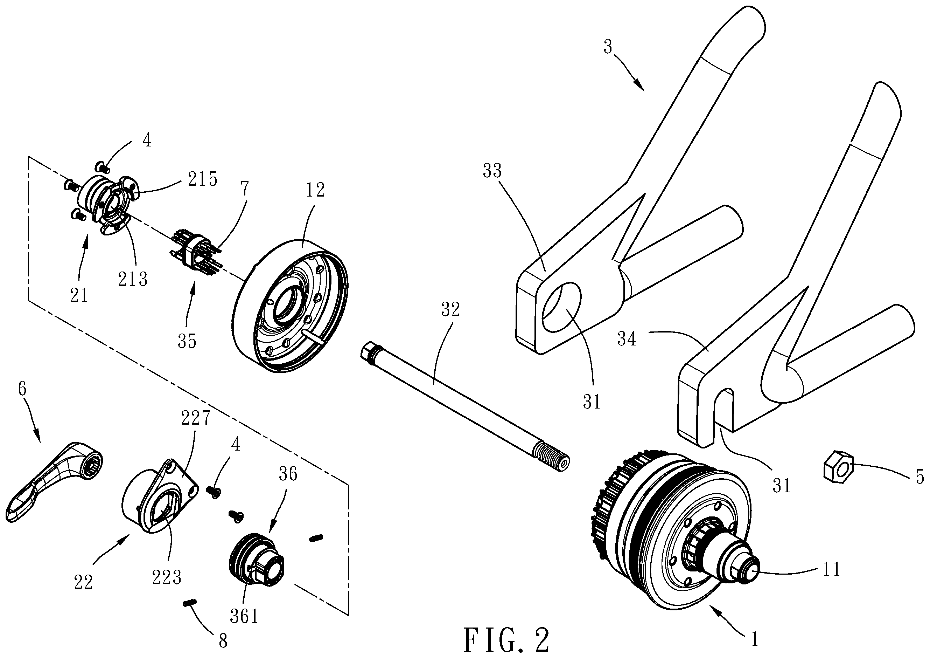

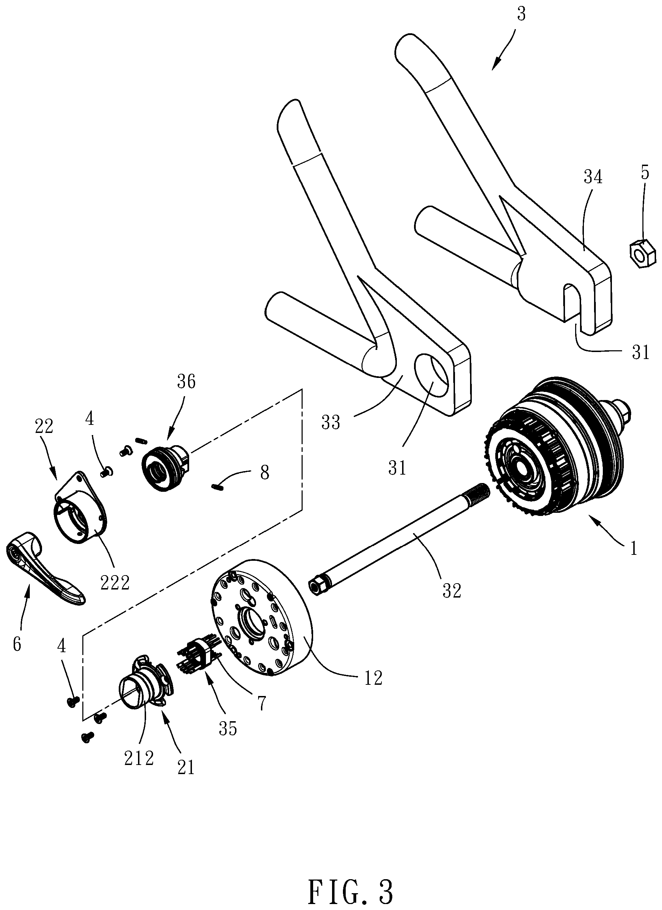

Please refer to FIGS. 1 to 3, an anti-misassembly and anti-rotation structure of the present invention comprises a hub motor 1, an anti-misassembly and anti-rotation component 2, and a rear fork component 3. The anti-misassembly and anti-rotation component 2 is assembled on one side of the rear fork component 3 and one side of the hub motor 1. The rear fork component 3 and the hub motor 1 are then connected to each other through the anti-misassembly and anti-rotation component 2, thereby achieving an anti-misassembly and anti-rotation mechanism.

The hub motor 1 includes a through hole 11 and a side cover plate 12. It should be noted here that the hub motor 1 of the present invention primarily serves to provide a slot (such as the through hole 11) for fitting a through shaft 32 of the rear fork component 3, and to provide a position (such as the side cover plate 12) for securing the anti-misassembly and anti-rotation component 2. The internal structure of the hub motor 1 is not a key aspect of the present invention and is therefore not limited by any specific structural features.

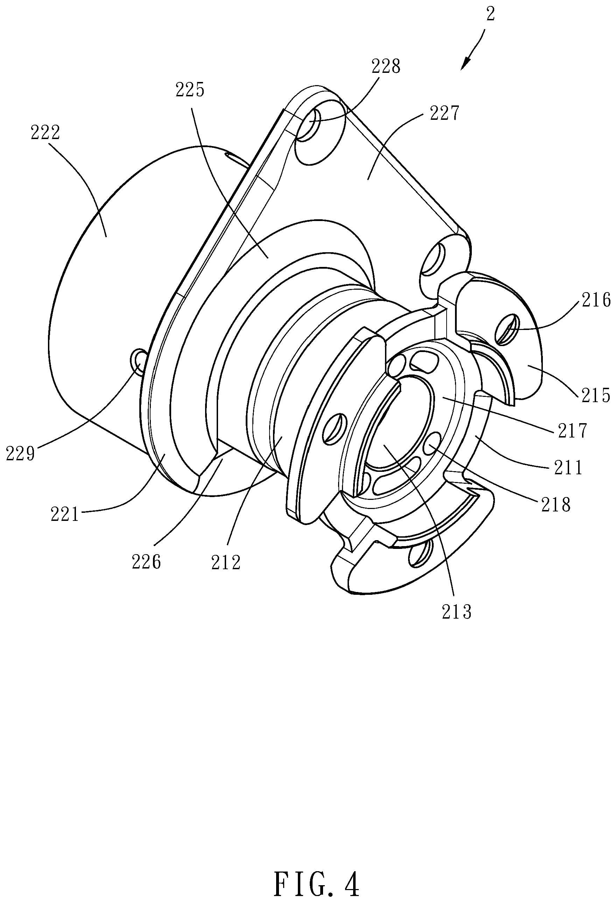

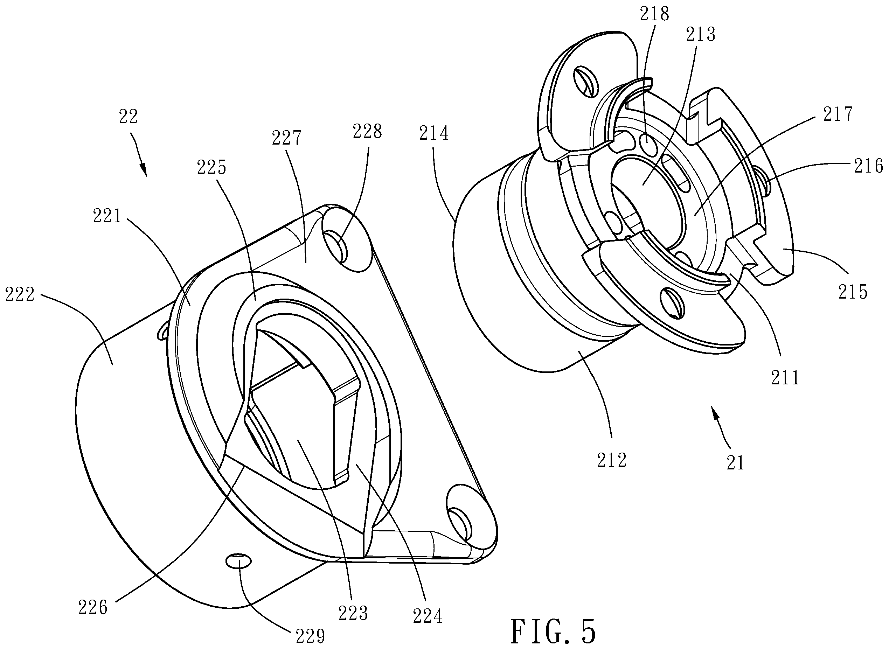

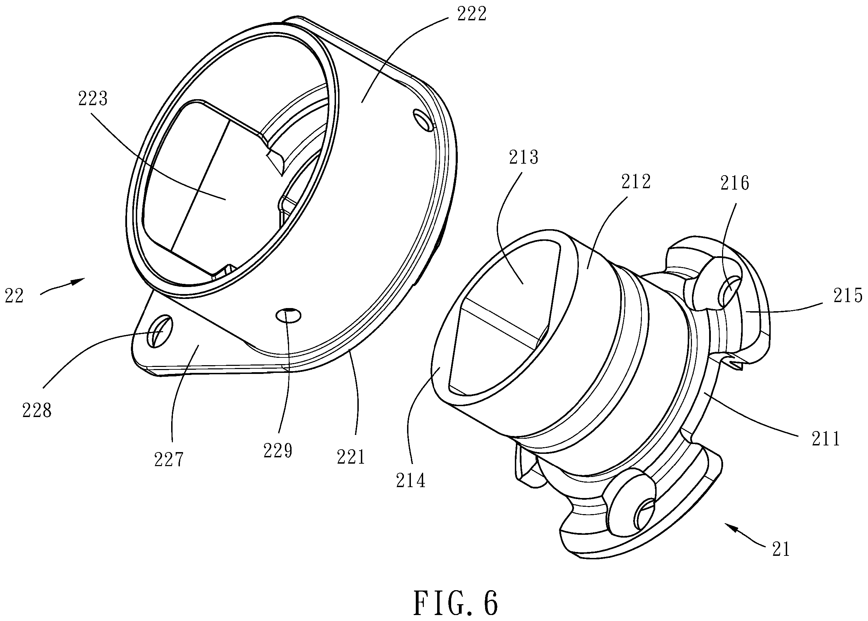

As shown in FIGS. 4 to 6, the anti-misassembly and anti-rotation component 2 includes a first adapter 21 and a second adapter 22. The first adapter 21 has a first base 211, a first annular portion 212 vertically protruding from the first base 211, and a first shaft hole 213 passing through the first base 211 and the first annular portion 212. A first inclined surface 214 is formed at one end of the first annular portion 212. A plurality of first lugs 215 protrude from the outer peripheral edge of the first base 211 and each have a first locking hole 216. The second adapter 22 includes a second base 221, a second annular portion 222 vertically protruding from the second base 222, and a second shaft hole 223 passing through the second base 221 and the second annular portion 222. A second inclined surface 224 and a stopper flange 225 surrounding the second inclined surface 224 are formed on the second base 221. The stopper flange 225 further has an opening 226, and a plurality of second lugs 227 protrude from the outer peripheral edge of the second base 221 and each have a second locking hole 228.

The rear fork component 3 includes two mounting portions 31 and a through shaft 32.

During installation, screws 4 are passed through the first locking holes 216 of the first lugs 215 to secure the first adapter 21 to the side cover plate 12 of the hub motor 1. Another screws 4 are then used to secure the second adapter 22 to the rear fork component 3 through the second locking holes 228 of the second lugs 227. One of the mounting portions 31 of the rear fork component 3 is simultaneously fitted around the outer periphery of the second annular portion 222 of the second adapter 22. **In** this way, the first adapter 21 and the second adapter 22 are respectively fixed to one side of the hub motor 1 and a left rear fork 33 of the rear fork component 3.

Subsequently, the first inclined surface 214 of the first adapter 21 is brought into contact with the second inclined surface 224 of the second adapter 22, such that the outer periphery of the first annular portion 212 is abutted against the inner periphery of the stopper flange 225 of the second base 221, thereby enabling the first adapter 21 and the second adapter 22 to be interlocked with each other through the first inclined surface 214 and the second inclined surface 224. Since the first inclined surface 214 and the second inclined surface 224 are symmetrically designed, and the opening 226 of the second base 221 allows the first inclined surface 214 to contact the second inclined surface 224 from a specific direction, with the stopper flange 225 blocking the first annular portion 212, the present invention provides only a single direction in which the first adapter 21 and the second adapter 22 can be interlocked with each other. This serves as an anti-misassembly mechanism during assembly of the first adapter 21 and the second adapter 22.

Furthermore, the through shaft 32 is inserted through the through hole 11 of the hub motor 1, the first shaft hole 213 of the first adapter 21, and the second shaft hole 223 of the second adapter 22. The mounting portion 31 of the rear fork component 3, which is not fitted around the second adapter 22, is assembled to one end of the through shaft 32 and secured with a nut 5, such that the nut 5 is abutted against a right rear fork 34 of the rear fork component 3. The other end of the through shaft 32 is secured with a quick-release lever 6, with the quick-release lever 6 abutting against the left rear fork 33 of the rear fork component 3, thereby completing the installation. At this point, under the tightened state among the hub motor 1, the anti-misassembly and anti-rotation component 2, and the rear fork component 3, both the first adapter 21 and the second adapter 22 exert a force perpendicular to the first inclined surface 214 and the second inclined surface 224, thereby achieving a pressing effect.

In this way, the first inclined surface 214 of the first adapter 21 and the second inclined surface 224 of the second adapter 22 are pressed tightly against each other, so that the through shaft 32 is clamped between the first adapter 21 and the second adapter 22 and is thus unable to be rotated. As a result, when the hub motor 1 is rotated, it cannot drive the through shaft 32 to rotate. Therefore, the rear fork component 3 and the hub motor 1 will not be loosened due to the rotation of the hub motor 1, thereby preventing failure in the output power of the hub motor 1 and achieving the anti-rotation effect.

In addition, the first adapter 21 can be assembled with the hub motor 1 via a first accessory 35. The first accessory 35 is provided with a plurality of pin grooves (not shown), and the inner periphery of the first annular portion 212 of the first adapter 21 is correspondingly provided with an inner edge bracket 217 and a plurality of pin holes 218 disposed on the inner edge bracket 217. A plurality of pins 7 are inserted through the pin grooves and the pin holes 218 and fixed to the hub motor 1, thereby enhancing the stability of the first adapter 21. The first accessory 35 is housed and secured within the first shaft hole 213 of the first adapter 21 in a way that a first communication hole of the first accessory 35 communicates with the first shaft hole 213 of the first adapter 21. A second accessory 36 is provided with a plurality of fixing grooves 361. The second annular portion 222 of the second adapter 22 is correspondingly provided with a plurality of fixing holes 229 aligned with the fixing slots 361 of the second accessory 36, allowing a plurality of fixing members 8 to be fixed within the fixing grooves 361 and the fixing holes 229, thereby securing the second adapter 22 to the second accessory 36. The second accessory 36 is housed and fixed within the second shaft hole 223 of the second adapter 22, and a second communication hole of the second accessory 36 communicates with the second shaft hole 223 of the second adapter 22.

With the addition of the first accessory 35 and the second accessory 36, the through shaft 32 passes through the through hole 11 of the hub motor 1, the first shaft hole 213 of the first adapter 21, the first communication hole of the first accessory 35, and the second communication hole of the second accessory 36. After the nut 5 and the quick-release lever 6 are tightened, the first adapter 21 and the second adapter 22 are interlocked with each other via the first inclined surface 214 and the second inclined surface 224, and the outer periphery of the first annular portion 212 is abutted against the inner periphery of the stopper flange 225 of the second base 221. Since the first adapter 21 and the second adapter 22 are respectively secured to the first accessory 35 and the second accessory 36, a more stable structure is achieved. As a result, when the first inclined surface 214 and the second inclined surface 224 come into contact, positional deviation at the contact interface is less likely to occur, making it easier to achieve a tight pressing effect.

From the above description, it can be seen that, compared to the prior art, the present invention offers the following advantages:
1. When the hub motor 1, the anti-misassembly and anti-rotation component 2, and the rear fork component 3 are assembled, the first inclined surface 214 of the first adapter 21 and the second inclined surface 224 of the second adapter 22 are abutted against each other to generate a pressing force to secure the through shaft 32. In this way, the through shaft 32 will not be driven when the hub motor 1 is rotated, preventing loosening at the connection between the rear fork component 3 and the hub motor 1, thereby achieving an anti-rotation mechanism.
2. The present invention uses a symmetrical inclined surface design between the first adapter 21 and the second adapter 22. Further, the second inclined surface 224 of the second adapter 22 is surrounded by the stopper flange 225, so that the first adapter 21 can only be positioned against the second adapter 22 in a single orientation, thereby achieving an anti-misassembly mechanism.

## Claims

1. An anti-misassembly and anti-rotation structure for an electric bicycle, **characterized in that** comprising:
a hub motor (1) having a through hole (11) and a side cover plate (12);
an anti-misassembly and anti-rotation component (2) including a first adapter (21) fixed to the side cover plate (12) of the hub motor (1) and including a first base (211), a first annular portion (212) protruding from the first base (211) and having a first inclined surface (214), and a first shaft hole (213) passing through the first base (211) and the first annular portion (212), and a second adapter (22) including a second base (221), a second annular portion (222) protruding from the second base (221) and having a second inclined surface (224) and a stopper flange (225) surrounding the second inclined surface (224), and a second shaft hole (223) passing through the second base (221) and the second annular portion (222), wherein the first inclined surface (214) is abutted against the second inclined surface (224), and an outer periphery of the first annular portion (212) is abutted against an inner periphery of the stopper flange (225) of the second base (221); and
a rear fork component (3) including two mounting portions (31) and a through shaft (32) inserted into the through hole (11) of the hub motor (1), the first shaft hole (213) of the first adapter (21), and the second shaft hole (223) of the second adapter (22), wherein one of the mounting portions (31) is assembled to one end of the through shaft (32), and the other of the mounting portions (31) is assembled to the second annular portion (222) of the second adapter (22).

2. The anti-misassembly and anti-rotation structure for the electric bicycle as claimed in claim 1, **characterized in that** the first adapter (21) further includes a plurality of first lugs (215) protruding from the first base (211) and fastened to the side cover plate (12) of the hub motor (1).

3. The anti-misassembly and anti-rotation structure for the electric bicycle as claimed in claim 1, **characterized in that** the second adapter (22) further includes a plurality of second lugs (227) protruding from the second base (221) and fastened to the rear fork component (3).

4. The anti-misassembly and anti-rotation structure for the electric bicycle as claimed in claim 1, **characterized in that** the stopper flange (225) of the second adapter (22) has an opening (226), such that the outer periphery of the first annular portion (212) of the first adapter (21) is partially abutted against the inner periphery of the stopper flange (225) of the second base (221).

5. The anti-misassembly and anti-rotation structure for the electric bicycle as claimed in claim 1, **characterized in that** the rear fork component (3) further comprises a first accessory (35) received in the first shaft hole (213) of the first adapter (21) and having a first communication hole communicating with the first shaft hole (213), and a second accessory (36) received in the second shaft hole (223) of the second adapter (22) and having a second communication hole communicating with the second shaft hole (223).

6. The anti-misassembly and anti-rotation structure for the electric bicycle as claimed in claim 5, **characterized in that** the through shaft (32) is inserted into the through hole (11) of the hub motor (1), the first shaft hole (213) of the first adapter (21), the first communication hole of the first accessory (35), and the second communication hole of the second accessory (36).

7. The anti-misassembly and anti-rotation structure for the electric bicycle as claimed in claim 5, **characterized in that** the first accessory (35) comprises a plurality of pin grooves, and the inner periphery of the first annular portion (212) of the first adapter (21) is provided with an inner edge bracket (217) and a plurality of pin holes (218) disposed on the inner edge bracket (217); a plurality of pins (7) are inserted through the pin grooves and the pin holes (218) to secure the first accessory (35) in the first shaft hole (213) of the first adapter (21).

8. The anti-misassembly and anti-rotation structure for the electric bicycle as claimed in claim 5, **characterized in that** the second accessory (36) comprises a plurality of fixing grooves, and the second annular portion (222) of the second adapter (22) is provided with a plurality of fixing holes (229); a plurality of fixing members (8) are used to secure the second accessory (36) in the second shaft hole (223) of the second adapter (22) via the fixing grooves and the fixing holes (229).
